# EUROPÄISCHE PATENTANMELDUNG

(11) **EP 1 788 321 A2**
(43) Veröffentlichungstag der Anmeldung: **23.05.2007**
(21) Anmeldenummer: 06023589.2
(22) Anmeldetag: 14.11.2006
(51) Int. Cl.: F24J 2/46

(54) **Druckdichte Verbindung zwischen einem Endbereich einer Sammelleitung und einer Anschlussleitung in einem Sonnenkollektor**

(30) Priorität: 17.11.2005 DE 202005017913 U
(71) Anmelder: ROBERT BOSCH GMBH, 70442 Stuttgart (DE)
(72) Erfinder: Lüke, Wolfgang, 48282 Emsdetten (DE)

(57) **Zusammenfassung**

Die Erfindung betrifft eine druckdichte Verbindung zwischen einem Endbereich einer Sammelleitung (3) für ein Wärmeträgermedium in einem Sonnenkollektor und einer zugeordneten Anschlussleitung (4), welche insbesondere an einer Seitenfläche eines Sonnenkollektors entlang geführt ist, und bei der ein O-Ring (9) als Dichtung vorgesehen ist.

Der Erfindung liegt die Aufgabe zu Grunde, eine einfach aufgebaute und leicht zu montierende druckdichte Verbindung zwischen einem Endbereich einer Sammelleitung (3) für ein Wärmeträgermedium in einem Sonnenkollektor und einer zugeordneten Anschlussleitung (4) zu schaffen, die ein nahes Führen der Anschlussleitung (4) am seitlichen Kollektorrahmen ermöglicht und vermeidet, dass ein Schlauch dabei knickt.

Erfindungsgemäß ist daher der Endbereich der Anschlussleitung (4) als Winkeltülle (6) gestaltet und eine daran zu fixierende Überwurfmutter (7) ist über eine den Endbereich der Sammelleitung (3) hintergreifende Sicherungsscheibe (8) für eine Vorspannung des O-Ringes (9) in der zugeordneten Aufnahme (10) der Winkeltülle (6) vorgesehen.

## Beschreibung

Die Erfindung betrifft eine druckdichte Verbindung zwischen einem Endbereich einer Sammelleitung für ein Wärmeträgermedium in einem Sonnenkollektor und einer zugeordneten Anschlussleitung, gemäß dem Oberbegriff des Patentanspruches 1.

Solaranlagen bestehen aus mindestens einem Sonnenkollektor, der über einen Kreislauf mit einem Wärmeträgermedium mit einem Wärmespeicher in Verbindung steht. Ein Sonnenkollektor besitzt mindestens einen rohrförmigen Kanal für die Wärmeträgerflüssigkeit, welcher in Wärme leitendem Kontakt mit einem Absorberblech für die Solarstrahlung steht und in der Regel mit diesem verlötet ist. Dabei ist der rohrförmige Kanal an Sammelleitungen zur Zu- und Ableitung des Wärmeträgermediums angeschlossen. Die Sammelleitungen durchdringen an mindestens zwei Stellen die Kollektorwanne bzw. den Kollektorrahmen.

Je nach Warmwasserbedarf, Anlagensituation oder Betriebsbedingungen werden mehrere Sonnenkollektoren miteinander zu einem so genannten Kollektorfeld über die Sammelleitungen verbunden. Meistens wurden dabei seither Schläuche über die als Schlauchtüllen ausgebildeten Enden der Sammelleitungen gezogen und mit Schlauchschellen fixiert, oder es kamen metallisch-konisch dichtende Verschraubungen zum Einsatz. Besonders wichtig bei einer gattungsgemäßen, druckdichten Verbindung ist deren Flexibilität sowie die einfache Montage, da diese unter schwierigen Bedingungen, beispielsweise auf Dachflächen, erfolgen muss.

Immer häufiger wird auf einen Entlüfter für den Kreislauf des Wärmeträgermediums im Dachbereich verzichtet. Wird in diesem Fall der Schlauch der Anschlussleitung direkt auf das Ende der Sammelleitung geschoben, zum Beispiel in Form eines als Schlauchtülle umgeformten Kupferrohrendes, so muss der Schlauch in einem entsprechend großen Radius ins Dach eingeführt werden. Dadurch ergeben sich optische Nachteile, besonders bei der Dachintegration als einer möglichen Montageart. Generell ist es nämlich wichtig, die Anschlussleitungen von Solaranlagen möglichst unsichtbar zu verlegen.

Der Erfindung liegt daher die Aufgabe zu Grunde, eine einfach aufgebaute und leicht zu montierende druckdichte Verbindung zwischen einem Endbereich einer Sammelleitung für ein Wärmeträgermedium in einem Sonnenkollektor und einer zugeordneten Anschlussleitung zu schaffen, die ein nahes Führen der Anschlussleitung am seitlichen Kollektorrahmen ermöglicht und vermeidet, dass ein Schlauch dabei knickt.

Erfindungsgemäß wurde dies mit den Merkmalen des Patentanspruches 1 gelöst. Vorteilhafte Weiterbildungen sind den Unteransprüchen zu entnehmen.

Gekennzeichnet ist die druckdichte Verbindung dadurch, dass der Endbereich der Anschlussleitung als Winkeltülle gestaltet ist. Eine daran zu fixierende Überwurfmutter sorgt über eine den Endbereich der Sammelleitung hintergreifende Sicherungsscheibe für eine Vorspannung des O-Ringes in der zugeordneten Aufnahme der Winkeltülle.

Der Endbereich der Sammelleitung ist als Rohrtülle gestaltet, wobei der vordere Bereich einen durchmessergrößeren Bund mit einer Schrägfläche auf dem Außenmantel aufweist, welche als Anlagefläche für einen zugeordneten O-Ring dient. Diese steigt mit einem Neigungswinkel von etwa 10 bis 30 Grad zur Rohrachse, beginnend am freien Ende, nach außen hin an. Weiterhin ist im Endbereich der Sammelleitung, auf der vom freien Ende entfernten Seite hinter der Schrägfläche, ein durchmesserkleinerer Rohrabschnitt angeformt. Auf diesem Rohrabschnitt greift die Sicherungsscheibe in die Hinterschneidung hinter der Schrägfläche ein und bildet das Widerlager für die Überwurfmutter.

Die Aufnahme für den zugeordneten O-Ring in der Winkeltülle ist als Einsenkung und/oder Kammer gestaltet. Diese weist mindestens auf einem Teilbereich des Außenumfangs eine Schrägfläche auf, deren Neigungswinkel zur Rohrachse etwa dem Neigungswinkel der Schrägfläche auf dem Außenmantel des Endbereiches der Sammelleitung entspricht. Vorzugsweise wird der Endbereich einer Sammelleitung durch Umformen hergestellt.

Mit der erfindungsgemäßen Anordnung wird eine einfach aufgebaute und leicht zu montierende druckdichte Verbindung zwischen einem Endbereich einer Sammelleitung für ein Wärmeträgermedium in einem Sonnenkollektor und einer zugeordneten Anschlussleitung geschaffen. Generell kann damit die Anschlussleitung sehr nahe am seitlichen Kollektorrahmen geführt werden. So ist im Falle eines in das Dach integrierten Kollektorfeldes einfach realisierbar, mit seitlichen Abschlussblechen ein hydraulischer Anschlusskanal auszubilden. Durch die Winkelverschraubung wird es möglich, diesen Kanal sehr nahe am Kollektor anzuordnen und in geringen Abmessungen zu fertigen. Außerdem wird bei Verwendung von Schlauchleitungen ein Knicken vermieden. Bei Flachdachanlagen ohne Entlüfter am Kollektorfeld kann gänzlich auf den Solarschlauch verzichtet werden, weil die neuerungsgemäße Winkelverschraubung zum Einsatz kommt. Mit den weitgehend unsichtbar verlegten Anschlussleitungen verbessert sich das optische Erscheinungsbild der gesamten Solaranlage.

Durch Umformen kann auch die für die druckdichte Verbindung erforderliche Gestaltung sehr einfach an den Enden der Sammelleitungen von Sonnenkollektoren angebracht werden, zumal es sich dabei in der Regel um gut umformbare Kupferrohre handelt.

Die Zeichnung stellt ein Ausführungsbeispiel der Erfindung dar. Den Eckbereich eines Sonnenkollektors mit den Einzelteilen einer druckdichten Verbindung zeigt:

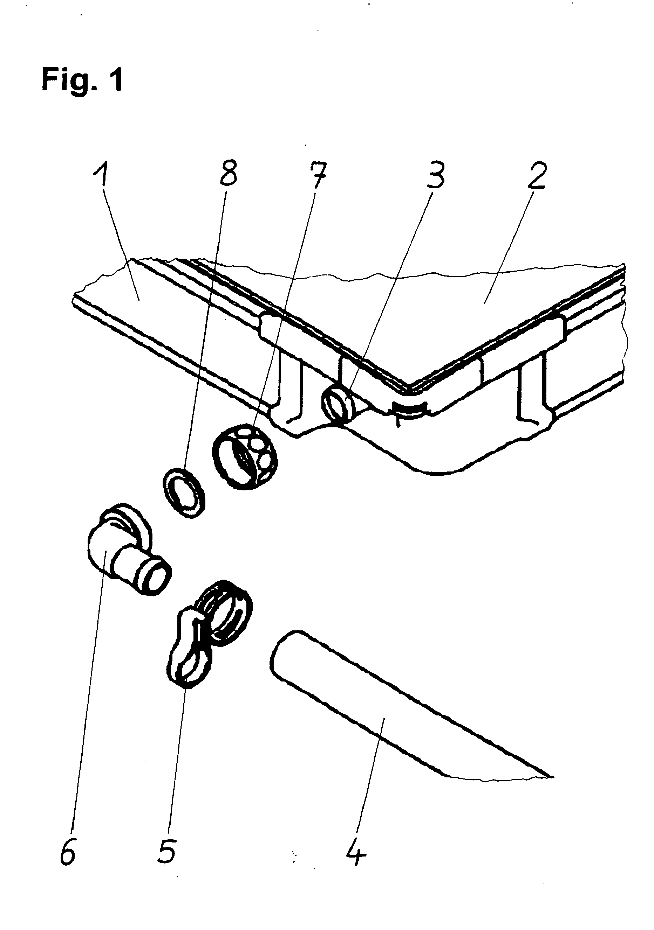

Fig. 1: in einer perspektivischen Darstellung als Explosionszeichnung und

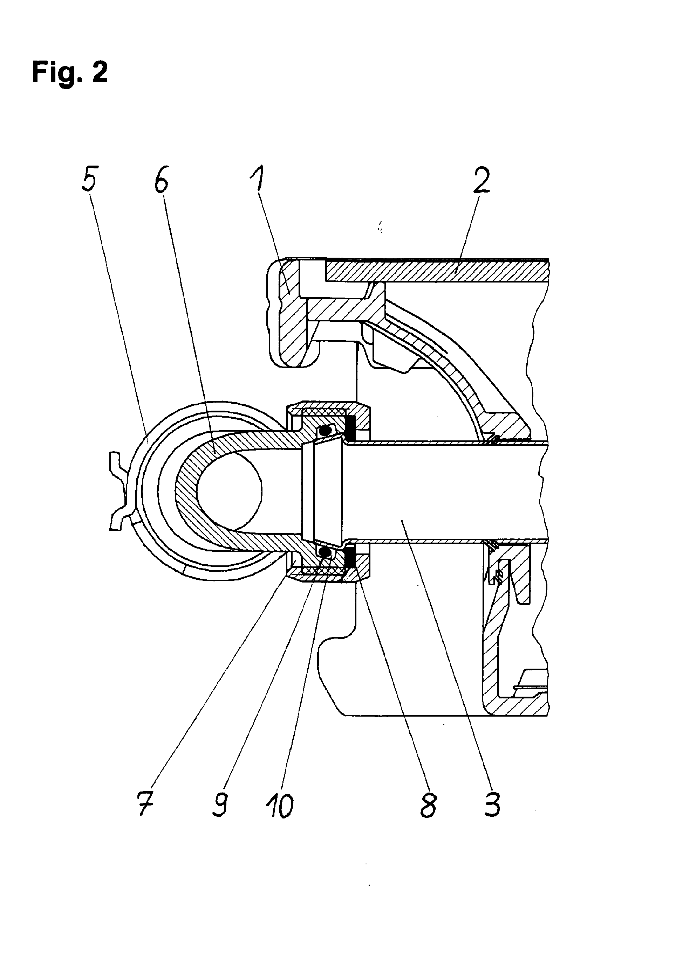

Fig. 2: im vertikalen Schnitt im montierten Zustand.

Ein Sonnenkollektor besteht im Wesentlichen aus einem Rahmen 1, einer transparenten Abdeckung 2, einer Sammelleitung 3 für ein Wärmeträgermedium und einer zugeordneten Anschlussleitung 4 mit einer Schlauchschelle 5.

Es entsteht eine druckdichte Verbindung, wenn der Endbereich der Anschlussleitung 4 als Winkeltülle 6 gestaltet ist. Mit einer Überwurfmutter 7, die Druck auf eine den Endbereich der Sammelleitung 3 hintergreifende Sicherungsscheibe 8 ausübt, wird die Verbindung vorgespannt. Ein O-Ring 9 ist in einer zugeordneten, kammerartigen Aufnahme 10 der Winkeltülle 6 positioniert. Der Endbereich der Sammelleitung 3 weist eine Schrägfläche auf dem Außenmantel auf und dient als Anlagefläche für den zugeordneten O-Ring 9 sowie die zugeordnete Schrägfläche in der Winkeltülle 6.

Bei der Montage wird zunächst die Überwurfmutter 7 über den Endbereich der Sammelleitung 3 geschoben. Anschließend wird eine Sicherungsscheibe 8 hinter der Aufweitung mit der Schrägflache im Endbereich der Sammelleitung 3 montiert, um die Überwurfmutter 7 zu halten. Danach wird die Überwurfmutter 7 auf das Außengewinde an der Winkeltülle 6 gedreht und die Verschraubung mit einem Werkzeug angezogen.

## Patentansprüche

1. Druckdichte Verbindung zwischen einem Endbereich einer Sammelleitung (3) für ein Wärmeträgermedium in einem Sonnenkollektor und einer zugeordneten Anschlussleitung (4), welche insbesondere an einer Seitenfläche eines Sonnenkollektors entlang geführt ist, und bei der ein O-Ring (9) als Dichtung vorgesehen ist,
**dadurch gekennzeichnet, dass** der Endbereich der Anschlussleitung (4) als Winkeltülle (6) gestaltet ist und dass eine daran zu fixierende Überwurfmutter (7) über eine den Endbereich der Sammelleitung (3) hintergreifende Sicherungsscheibe (8) für eine Vorspannung des O-Ringes (9) in der zugeordneten Aufnahme (10) der Winkeltülle (6) vorgesehen ist.

2. Verbindung nach Anspruch 1,
**dadurch gekennzeichnet, dass** der Endbereich der Sammelleitung (3) als Rohrtülle gestaltet ist, wobei der vordere Bereich einen durchmessergrößeren Bund mit einer Schrägfläche auf dem Außenmantel aufweist.

3. Verbindung nach den Ansprüchen 1 oder 2,
**dadurch gekennzeichnet, dass** im Endbereich der Sammelleitung (3) eine Schrägfläche auf dem Außenmantel als Anlagefläche für einen zugeordneten O-Ring (9) dient und mit einem Neigungswinkel von etwa 10 bis 30 Grad zur Rohrachse, beginnend am freien Ende, nach außen hin ansteigt.

4. Verbindung nach einem der Ansprüche 1 bis 3,
**dadurch gekennzeichnet, dass** im Endbereich der Sammelleitung (3), auf der vom freien Ende entfernten Seite hinter der Schrägfläche, ein durchmesserkleinerer Rohrabschnitt angeformt ist, und dass die Sicherungsscheibe (8) auf diesem Rohrabschnitt in die Hinterschneidung hinter der Schrägfläche eingreift.

5. Verbindung nach einem der Ansprüche 1 bis 4,
**dadurch gekennzeichnet, dass** die Aufnahme (10) für den zugeordneten O-Ring (9) in der Winkeltülle (6) als Einsenkung und/oder Kammer gestaltet ist, welche mindestens auf einem Teilbereich des Außenumfangs eine Schrägfläche aufweist, deren Neigungswinkel zur Rohrachse etwa dem Neigungswinkel der Schrägfläche auf dem Außenmantel des Endbereiches der Sammelleitung (3) entspricht.

6. Verbindung nach einem der Ansprüche 1 bis 5,
**dadurch gekennzeichnet, dass** der Endbereich einer Sammelleitung (3) durch Umformen hergestellt ist.
